## Europäisches Patentamt
## European Patent Office
## Office européen des brevets

(19)

(11) Veröffentlichungsnummer: **0 203 294**
**B1**

(12)

# EUROPÄISCHE PATENTSCHRIFT

(45) Veröffentlichungstag der Patentschrift:
09.05.90

(51) Int. Cl.⁵: **H01M 4/26**

(21) Anmeldenummer: 86103835.4

(22) Anmeldetag: 20.03.86

(54) Verfahren zur Herstellung negativer Cadmiumelektroden für gasdicht verschlossene alkalische Akkumulatorenzellen.

(30) Priorität: 28.05.85 DE 3519051

(43) Veröffentlichungstag der Anmeldung:
03.12.86 Patentblatt 86/49

(45) Bekanntmachung des Hinweises auf die Patenterteilung:
09.05.90 Patentblatt 90/19

(84) Benannte Vertragsstaaten:
CH DE FR GB IT LI

(73) Patentinhaber: VARTA Batterie Aktiengesellschaft, Am Leineufer 51, D-3000 Hannover 21(DE)

(72) Erfinder: Woidt, Jürgen, Dr. Dipl.-Chem., Auf dem Bauloh 15, D-5800 Hagen 5(DE)
Erfinder: Fries, Wolfgang, Dipl.-Ing., Schaumburger Strasse 9, D-5800 Hagen(DE)

(74) Vertreter: Kaiser, Dieter Ralf, Dipl.-Ing., Gundelhardtstrasse 72, D-6233 Kelkheim/Ts.(DE)

(56) Entgegenhaltungen:
EP-A- 0 160 845
DE-A- 2 318 075
FR-A- 2 546 667

PROGRESS IN BATTERIES & SOLAR CELLS, Band 5, 1984, Seiten 363-366, South Norwalk, Conn. US; B. STIKER und R. VIGNAUD: "New process to discharge negative cadmium electrodes for Ni/Cd batteries"
CHEMICAL ABSTRACTS, Band 79, Nr. 18, 5. November 1973, Seite 441, Zusammenfassung 111173j, Columbus, Ohio, US; & JP-A-73 45 834 (SANYO ELECTRIC CO. LTD.) 30-06-1973
PATENTS ABSTRACTS OF JAPAN, Band 4, Nr. 121, (E-23)[603], 27. August 1980; & JP-A-55 76570 (FURUKAWA DENCHI K.K.) 09-06-1980
PATENTS ABSTRACTS OF JAPAN, Band 5,

(56) Entgegenhaltungen: (Fortsetzung)
Nr. 153 (E-76)[825], 26. September 1981; & JP-A-56 86461 (MATSUSHITA DENKI SANGYO K.K.) 14-07-1981
PATENTS ABSTRACTS OF JAPAN, Band 6, Nr. 251 (E-147)[1129], 10. Dezember 1982; & JP-A-57 151177 (YUASA DENCHI K.K.) 18-09-1982

## Beschreibung

Die Erfindung betrifft ein Verfahren zur Herstellung negativer Cadmiumelektroden für gasdicht verschlossene alkalische Akkumulatorenzellen in Bandform, welche außerhalb der Zelle zwecks Bildung einer Ladereserve einer Teiloxidation durch chemische Behandlung mit Oxidationsmitteln in alkalischer Lösung unterworfen werden, in der auch eine Zersetzung gebildeter Schwermetallperoxide und die Hydratation von CdO zu $Cd(OH)_2$ erfolgen.

Bei gasdicht arbeitenden alkalischen Akkumulatoren z.B. des Ni/Cd-Typs genügt es bekanntlich nicht, die beiden Elektrodenpolaritäten mit gleichgroßen Kapazitäten auszulegen, wenn neben der geforderten Nennkapazität der Zelle auch noch ein Überladeschutz vorhanden sein und bei Entladung mit hohen Strömen eine Polumkehr ausgeschlossen werden soll. So ist die negative Elektrodenkapazität in einer stabil eingestellten oder gut "ausbalancierten" Zelle gegenüber der positiven stets überdimensioniert, wobei sie formal einen der positiven Kapazität entsprechenden Nutzkapazitätsanteil besitzt und der Kapazitätsüberschuß sich in eine Ladereserve und eine Entladereserve aufteilt. Im voll entladenen Zellenzustand befindet sich die negative Elektrode daher in einem nur teilentladenen Zustand, indem noch entladbares $Cd_{med}$ im Umfang der eingestellten Entladereserve vorhanden ist. Im vollgeladenen Zellenzustand ist die negative Elektrode – im Gegensatz zur positiven – nur teilgeladen und behält diesen Zustand auch bei fortgesetzter Ladung bei, weil der weiter fließende negative Ladestrom kein weiteres $Cd(OH)_2$ mehr zu $Cd_{met}$ reduziert, sondern nur noch den in äquivalenter Menge an der positiven Elektrode entwickelten Sauerstoff umsetzt. Die negative Cadmiumelektrode bleibt somit teiloxidiert im Umfang der vorgesehenen Ladereserve.

In der Fertigung gasdichter Akkumulatoren besteht seit langem eine probate Methode darin, bereits komplett montierte, aber noch offene Zellen durch elektrische Behandlung in den ebengenannten Zustand der Volladung zu bringen und dann möglichst rasch zu verschließen. Wegen des Aufwandes an apparativen Einrichtungen, Prozeßzeiten und Personal hat es aber auch nicht an Versuchen gefehlt, die Balancierung der Elektroden bereits vor ihrem Einbau vorzunehmen und sie chemisch oder elektrochemisch so zu präparieren, daß nach ihrer Einsetzung in den Behälter, Elektrolytzugabe und Verschließen unmittelbar gebrauchsfertige Zellen erhalten werden. Je nachdem, ob man von ungeladenem oder geladenem negativen Elektrodenmaterial ausgeht, erreicht man den erforderlichen Einbauzustand entweder durch eine chemische bzw. elektrochemische Teiloxidation oder durch eine Teilreduktion.

Als sehr vorteilhaftes Mittel, um ein – verfahrensbedingt – bereits hochaktives, negatives Elektrodenband (sogenannte Elektrodeposit-Elektrode) teilzuoxidieren, wurde unlängst in der DE-A 3 416 817 eine Wasserstoffperoxid-Lösung vorgeschlagen. Nach Waschen und Trocknen resultiert ein bezüglich seines Kapazitätszustandes hinlänglich stabiles, teiloxidiertes negatives Band, das – zu Elektroden geschnitten – mit bezüglich ihrer Gesamtkapazität und ihres Ladezustandes entsprechend eingestellten positiven Elektroden kombiniert werden kann. Ein derartiges Verfahren ist auch der Literaturstelle "Progress in batteries and solar cells" Band 5, 1984, Seite 363–366 zu entnehmen. Eine aus derart vorbehandelten Elektroden gebaute Zelle kann unmittelbar nach Zudosierung der notwendigen Elektrolytmenge – zumeist eine KOH-Lösung – fest verschlossen und ohne aufwendige elektrische Behandlungen unmittelbar in Betrieb genommen werden.

Die Dosierung des Elektrolyten in die bereits vollständig komplettierte, jedoch noch unverschlossene Zelle wird in herkömmlicher Weise automatisch mittels Kolbenpumpen bei sehr kurzen Taktzeiten vorgenommen. Dabei macht sich eine erhebliche von der Zellengröße abhängige Wärmeentwicklung störend bemerkbar. Sie wird verursacht durch die im alkalischen Medium spontan hervorgerufene Zersetzung gebildeter Schwermetallperoxide, die Desorption von Sauerstoff sowie die freigesetzte Hydratationswärme bei der Befeuchtung der noch trockenen Elektroden. Bereits kleine Zellen erreichen innerhalb von Sekunden Temperaturen bis zu 70°C, bei größeren steigen die Temperaturen noch höher. Eine aus Verkochen und Verspritzen von Elektrolyt resultierende Sprudelwirkung beeinträchtigt die Dosiergenauigkeit, und die hohen Temperaturen selbst erweisen sich als schädlich, indem sie den Abbau von Polyamidscheidern beschleunigen und die vorher eingestellte Elektrodenbalance verändern.

Der Erfindung liegt daher die Aufgabe zugrunde, die erwähnten Mängel auszuschalten und damit die grundsätzlichen Vorteile, durch welche alle Verfahren der Balanceeinstellung mit Hilfe einer Wasserstoffperoxidlösung ausgezeichnet sind, uneingeschränkt zur Geltung zu bringen.

Die Aufgabe wird erfindungsgemäß mit den in Anspruch 1 angegebenen Maßnahmen gelöst.

Mit anderen Worten liegt die erfindungsgemäße Lösung des Problems darin, daß die mit der Elektrolytdosierung verbundenen Zersetzungs-, Desorptions- und Hydratationsvorgänge, hier vor allem die Umwandlung des CdO in $Cd(OH)_2$, vom Verarbeitungsvorgang abgekoppelt und aus der Zelle heraus in einen mit der Elektrodenbehandlung zu koppelnden Verfahrensschritt verlegt werden. Hierzu werden die zuvor mit Oxidationsmitteln wie Wasserstoffperoxid- oder Kaliumperoxodisulfatlösung behandelten Elektroden, insbesondere Cadmiumelektroden des Elektrodeposit- oder des Sintertyps einer Nachbehandlung unterzogen.

Diese besteht in einer Reduktion der Schwermetallperoxide durch alkalisch reagierende Reduktionsmittel wie z.B. Natriumsulfid, Natriumsulfit, Hydrazin oder Hydroxylamin. Dabei werden Sauerstoff und Wärme abgeführt, bevor die Elektroden zum Zelleneinbau gelangen.

Die Elektroden werden anschließend nach herkömmlichen Methoden alkalifrei gewaschen und getrocknet, sofern man nicht eine unmittelbare Weiterverarbeitung gegebenenfalls unter Schutzgas zur Verhinderung einer Autoxydation der aktiven Elektrodenmasse vorzieht.

Die Verwendung von bandförmigem Elektrodenmaterial erlaubt es, im kontinuierlichen Durchlauf den Zersetzungsvorgang auf den Oxidationsprozeß mit Wasserstoffperoxid unmittelbar folgen zu lassen. Diesen kontinuierlichen Verfahrensschritten kann man sehr vorteilhaft einen weiteren kontinuierlichen Arbeitsschritt anfügen, wenn man zur Aufrechterhaltung des eingestellten Elektroden-Ladezustandes für eine umgehende Neutralisation des in den Elektrodenporen festgehaltenen Alkalis im Sinne einer Konservierung der Kapazität und damit der Elektrodenbalance sorgt. Dies geschieht erfindungsgemäß, indem das Elektrodenband anschließend ein Tauchbad mit einer schwach sauren Lösung durchläuft. Von Vorteil ist die Lösung einer schwachen Mineralsäure in einer die stöchiometrische Neutralisationsmenge übersteigenden Konzentration.

Als besonders günstig haben sich hierfür eine Borsäurelösung, aber auch sauer reagierende Metallsalzlösungen wie z.B. eine Cadmiumsulfatoder Nickelsulfatlösung erwiesen. Die pH-Werte sowohl des Zersetzungsbades wie auch des Neutralisationsbades werden automatisch überwacht und die Badkonzentration mit Hilfe üblicher Dosiereinrichtungen konstant gehalten. Bei entsprechender Abstimmung der Badkonzentrationen kann ein anschließendes Waschen der behandelten Elektrodenbänder unterbleiben. Es genügt vielmehr, die Elektrodenbänder nach einem gängigen Verfahren zu trocknen.

Durch das erfindungsgemäße Verfahren wird das teilgeladene Elektrodenband nachhaltig konserviert, so daß selbst bei mehrtägigem Lagern an der Luft weder eine merkliche Verschiebung des balancierten Ladezustandes, noch eine nachteilige Karbonatisierung durch Aufnahme von Kohlendioxid aus der Luft eintritt.

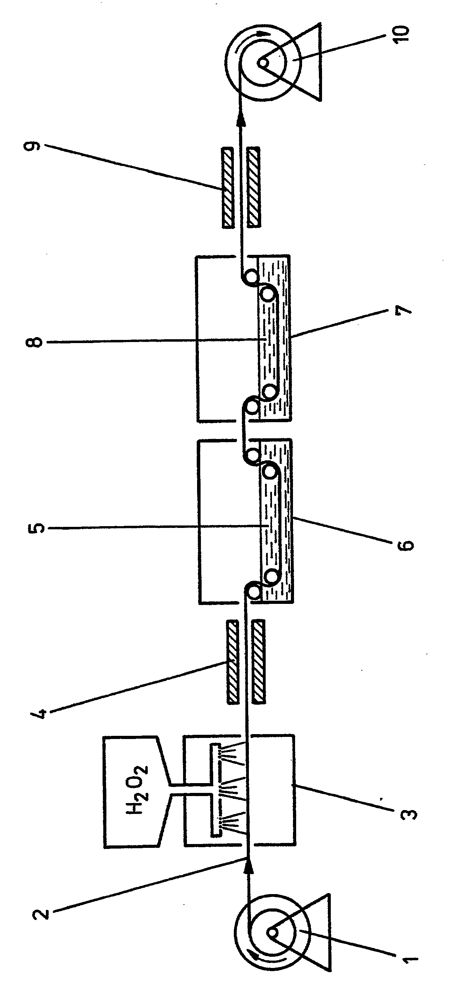

Die Figur 1 zeigt den Ablauf und die Verknüpfung der erfindungsgemäßen Verfahrensschritte.

Von der Vorratsrolle 1 ablaufendes Endlosband 2, welches z.B. ein nach dem Elektrodeposit-Verfahren hergestelltes und ausschließlich $Cd_{met.}$ enthaltendes aktives Cadmiumband ist, erfährt zunächst in der Durchlaufstation 3 die bekannte dosierte Sprühbehandlung mit $H_2O_2$-Lösung, wodurch der für den Zelleneinbau erforderliche teiloxidierte Zustand hergestellt wird. Das Band durchläuft darauf eine Trockenstrecke 4 und wird dann zwecks Reduktion von gebildetem Cadmiumperoxid, evtl. auch Nickelperoxid aus dem Trägermaterial, sowie zur Hydratation des elektrochemisch nicht wirksamen CdO durch das mit alkalischem Reduktionsmittel 5 gefüllte Tauchbad 6 geführt. Dem Zersetzungs- und Hydratationsbad 6 nachgeschaltet ist das Tauchbad 7 mit schwach saurer Metallsalzlösung 8, welche das mit dem Band aus dem Tauchbad 6 eingeschleppte Alkali neutralisiert. Das Elektrodenband passiert schließlich eine weitere Trockenstrecke 9 und läuft auf der Rolle 10 auf.

Die nach dem erfindungsgemäßen Verfahren hergestellten Elektrodenbänder können zu Elektroden gewünschter Dimensionen geschnitten und unmittelbar oder nach Lagerung mit entsprechend dimensionierten und vorbehandelten Gegenelektroden zu Zellen verarbeitet werden, die nach störungsfreiem automatischen Zudosieren der notwendigen Elektrolytmenge gasdicht verschlossen und unmittelbar und ohne weitere Manipulationen in Betrieb genommen werden können.

## Patentansprüche

1. Verfahren zur Herstellung negativer Cadmiumelektroden für gasdicht verschlossene alkalische Akkumulatorenzellen in Bandform, welche außerhalb der Zelle zwecks Bildung einer Ladereserve einer Teiloxidation durch chemische Behandlung mit Oxidationsmitteln in alkalischer Lösung unterworfen werden, in der auch eine Zersetzung gebildeter Schwermetallperoxide und die Hydratation von CdO zu $Cd(OH)_2$ erfolgen, dadurch gekennzeichnet, daß das Elektrodenband nach der Teiloxidation, jedoch vor dem Einbau in die Zelle, mit einem alkalisch reagierenden Reduktionsmittel behandelt wird.

2. Verfahren nach Anspruch 1, dadurch gekennzeichnet, daß der in alkalischem Medium stattfindenden Behandlung eine neutralisierende Tauchbehandlung in einer schwachen Säure oder sauer reagierenden Metallsalzlösung nachgeordnet ist.

3. Verfahren nach Anspruch 2, dadurch gekennzeichnet, daß die Metallsalzlösung eine Cadmiumsulfat- oder Nickelsulfatlösung ist.

4. Verfahren nach einem der Ansprüche 1 bis 3, dadurch gekennzeichnet, daß die zur Teiloxidation der Elektroden verwendeten chemischen Mittel Wasserstoffperoxid oder Kaliumperoxodisulfat sind.

5. Verfahren nach den Ansprüchen 1 bis 4, dadurch gekennzeichnet, daß das Elektrodenband kontinuierlich durch hintereinander angeordnete Tauchbäder für die reduzierende Behandlung und für die Neutralisationsbehandlung hindurchgeführt wird.

## Claims

1. Process for producing negative cadmium electrodes for alkaline accumulator cells with gas-tight sealing in strip form, which electrodes are subjected to a partial oxidation outside the cell, for the purpose of forming a charge reserve, by chemical treatment with oxidizing agents in an alkaline solution in which a decomposition of heavy metal peroxides formed and the hydration of CdO to $Cd(OH)_2$ also take place, characterized in that, after the partial oxidation but before incorporation in the cell, the electrode strip is treated with a reducing agent having an alkaline reaction.

2. Process according to Claim 1, characterized in that a neutralizing immersion treatment in a weak acid or metal salt solution having an acidic reaction is carried out after the treatment which takes place in an alkaline medium.

3. Process according to Claim 2, characterized in that the metal salt solution is a cadmium sulphate solution or nickel sulphate solution.

4. Process according to one of Claims 1 to 3, characterized in that the chemical agents used to partially oxidise the electrodes are hydrogen peroxide or potassium peroxodisulphate.

5. Process according to Claims 1 to 4, characterized in that the electrode strip is passed continuously through immersion baths arranged one behind another for the reducing treatment and for the neutralizing treatment.

**Revendications**

1. Procédé de fabrication, en forme de bande, d'électrodes négatives en cadmium pour cellules d'accumulateurs alcalins étanches aux gaz, lesquelles électrodes sont soumises, à l'extérieur de la cellule, en vue de la formation d'une réserve de charge, à une oxydation partielle par traitement chimique avec des agents oxydants en solution alcaline dans laquelle se produisent également une désintégration des péroxydes de métal lourd formés et une hydratation de CdO en Cd(OH)$_2$, caractérisé en ce que la bande d'électrode est traitée avec un agent de réduction à réaction alcaline après l'oxydation partielle mais avant le montage dans la cellule.

2. Procédé selon la revendication 1, caractérisé en ce que le traitement ayant lieu en milieu alcalin est suivi d'un traitement neutralisant par immersion dans un acide faible ou dans une solution de sel métallique à réaction acide.

3. Procédé selon la revendication 2, caractérisé en ce que la solution de sel métallique est une solution de sulfate de cadmium ou de sulfate de nickel.

4. Procédé selon l'une des revendications 1 à 3, caractérisé en ce que les agents chimiques utilisés pour l'oxydation partielle des électrodes sont du péroxyde d'hydrogène ou péroxodisulfate de potassium.

5. Procédé selon les revendications 1 à 4, caractérisé en ce qu'on fait passer la bande d'électrodes de manière continue dans des bains d'immersion disposés les uns derrière les autres pour le traitement de réduction et pour le traitement de neutralisation.